Europäisches Patentamt

European Patent Office

Office européen des brevets

(11) Publication number : **0 557 112 A1**

(12) **EUROPEAN PATENT APPLICATION**

(21) Application number : 93301222.1

(22) Date of filing : 19.02.93

(51) Int. Cl.⁵ : **D21C 9/10, D21C 9/147, D21C 9/153, D21C 9/16**

(30) Priority : 21.02.92 US 839389

(43) Date of publication of application :
25.08.93 Bulletin 93/34

(84) Designated Contracting States :
AT BE CH DE DK ES FR GB GR IE IT LI LU MC
NL PT SE

(71) Applicant : Kamyr, Inc.
Ridge Center
Glens Falls, New York 12801-3686 (US)

(72) Inventor : Henricson, Kaj
A. Ahlstrom
SF-48601 Karhula (FI)
Inventor : Phillips, Joseph R.
Kamyr Inc., Ridge Center
Glens Falls, New York 12801 (US)
Inventor : Prough, J. Robert
Kamyr Inc., Ridge Center
Glens Falls, New York 12801 (US)
Inventor : Vilpponen, Aki
A. Ahlstrom
SF-48601 Karhula (FI)
Inventor : Jiang, Jian Er
Kamyr Inc., Ridge Center
Glens Falls, New York 12801 (US)

(74) Representative : Moore, John Hamilton
J. H. Moore & Co., 8 Gaiafields Road
Lichfield, Staffs. WS13 7LT (GB)

(54) **Chlorine free bleaching and pulping process.**

(57)   Kraft pulp is bleached to acceptable bright-
ness without the use of chlorinated organic
compounds, yet it still has commercially accept-
able strength properties. During production of
the kraft pulp it is subjected to extended delig-
nification, by adding kraft white liquor to a first
recirculation loop (27-30) in the digester (19),
and a second, wash, recirculation loop (37-40)
in the digester. Then the pulp is subjected to hot
alkali extraction (60) ; followed by two oxygen
stages (62, 63) ; then preferably acid washing
(69) to prevent the build up of heavy metals ;
and then is subjected to ozone bleaching (71) at
medium consistency. The bleaching sequence
after acid washing may be ZEZPZ, and the E
stage may be an oxidative peroxide extraction
stage.

FIG. 1A

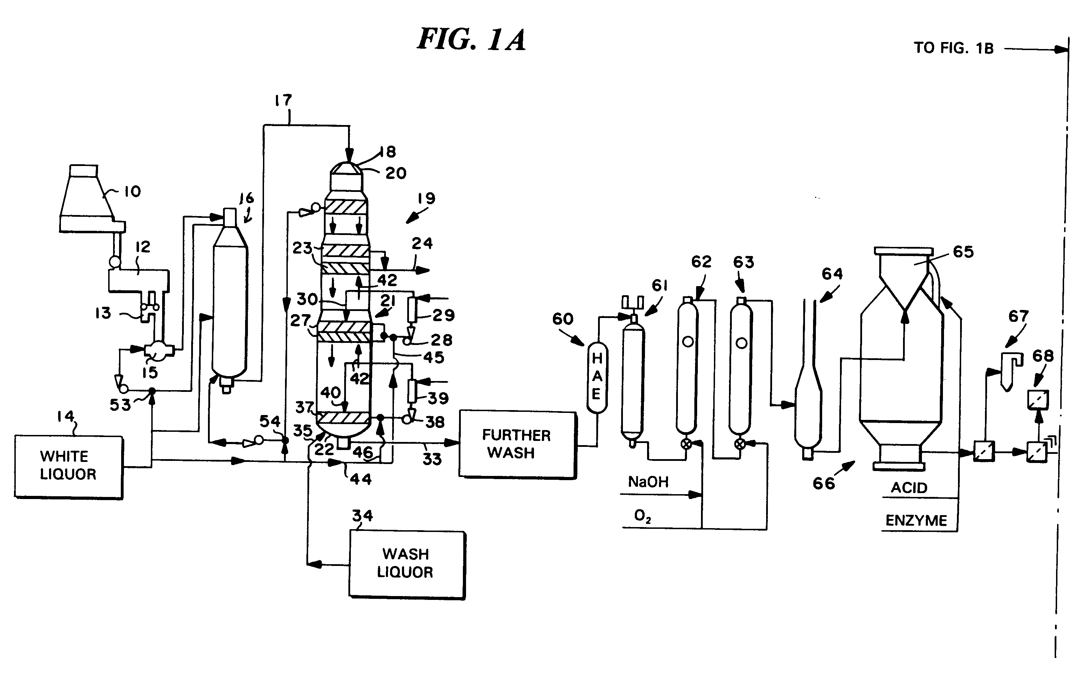

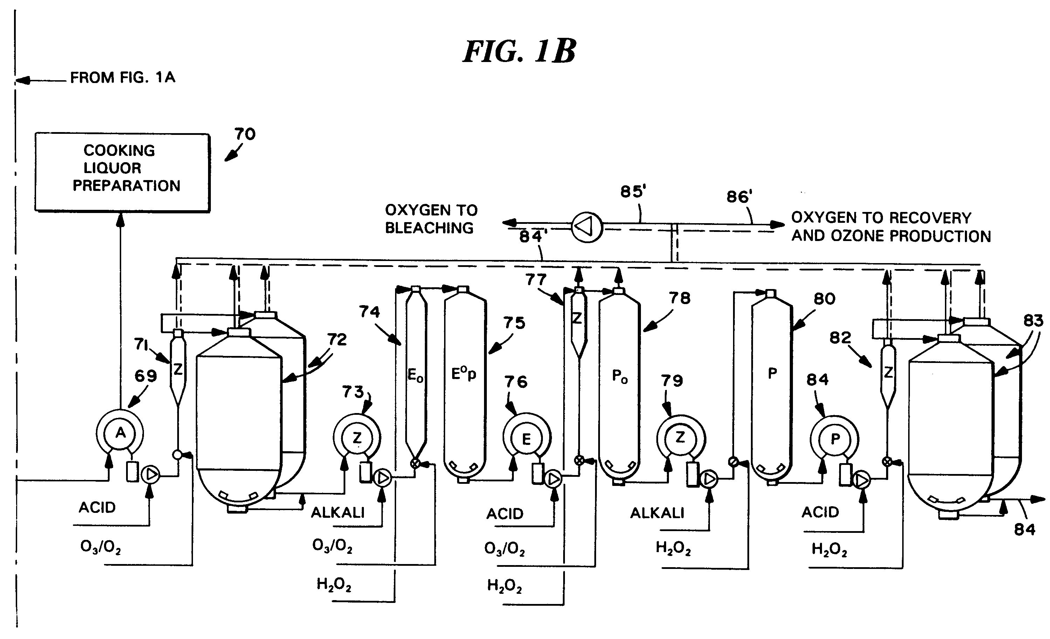

TO FIG. 1B

EP 0 557 112 A1

In the production of bleached kraft pulp there have been increasing regulatory and market demands to reduce or eliminate the presence of chlorinated organic compounds in pulp products and bleaching effluents. In order to properly react to such demands, it is necessary to eliminate the use of chlorine gas or any other chlorine containing compound (e.g. chlorine dioxide). However, the removal of the chlorine based bleaching agents makes it extremely difficult to achieve desired brightness levels, especially if the pulp produced is to have acceptable strength properties. For example oxygen delignification must be utilised, and multiple stage oxygen delignification --especially with chelating treatment to control deleterious metal ions -- has been shown to offer advantages in delignification and selectivity, especially when there is between-stage washing (see U.S. Patent 4,946,556). However, there are practical limits governing both the extent of delignification and the quality of pulp obtainable using oxygen delignification alone.

●Of other available bleaching agents, perhaps the most promising is ozone. It has been demonstrated that ozone is a highly effective delignifying agent, however ozone has seen only marginal commercial acceptance to date in the pulp industry. The main obstacles to commercial utilisation of ozone have been the chemical cost of ozone when large doses are needed, and the degradation of pulp strength that typically occurs relative to conventionally bleached pulps.

Thus, there has long been a need for bleached kraft pulp with commercially acceptable strength properties without the use of chlorine based bleaching agents. According to the present invention, and that of the parent application, it is possible to finally achieve that goal.

According to the present invention the basic approach that is taken is to have a pulp with minimum Kappa Number and maximum strength before it is subjected to ozone, and subsequent non-chlorine, bleaching sequences. This is accomplished according to the present invention by utilising kraft pulp produced from extended delignification processes. Continuous digesters sold by Kamyr, Inc. of Glens Falls, New York under the trademark "EMCC" practice a process known as extended modified continuous cooking. Such a process can produce softwood pulps having a very low Kappa Number, typically about 18-20, while maintaining a high pulp viscosity -- comparable to that for a conventional kraft (CK) pulp at a Kappa Number of 30. In the practice of the method according to the invention, a hot alkali extraction is utilised to remove lignin from the pulp after treatment in an "EMCC" digester, metals are typically removed, and then the pulp is subjected to ozone bleaching stages.

According to one aspect of the present invention, there is provided a method of continuously kraft pulping and then bleaching comminuted cellulosic fibrous material using an upright digester having top, bottom and central portions, comprising the following steps: (a) Passing comminuted cellulosic fibrous material entrained in kraft white liquor into the top of the digester. (b) Extracting black liquor from at least one screen between the top and bottom of the digester. (c) At a first portion of the digester withdrawing and recirculating liquid in a first recirculation loop. (d) Adding kraft white liquor to the first recirculation loop. (e) Adjacent the bottom of the digester withdrawing and recirculating liquid in a second, wash, recirculation loop. (f) Adding kraft white liquor to the second recirculation loop, the liquor recirculated into the digester in part passing upwardly therein countercurrent to the material flow, the amount of white liquor added in the second recirculation loop being sufficient to increase the viscosity and strength properties of the pulp produced compared to the practice of the same method with the same material, Kappa Number, and other parameters only without step (f). (g) Withdrawing kraft pulp from the bottom of the digester, steps (a)-(f) being practised to produce pulp having a Kappa Number comparable to about 20 or below for softwood. (h) Subjecting the pulp withdrawn from the bottom of the digester to a hot alkali extraction to extract lignin therefrom without degradation of the pulp fibres; and then (i) effecting bleaching of the pulp with non-chlorine containing bleaching chemicals to obtain a bleached pulp having properties comparable to that obtained by treating CK pulp with a DEDED sequence.

The bleaching chemicals utilised in the practice of step (i) are, first, oxygen (O), and peroxide (P) and ozone (Z); a typical bleaching sequence is OOAZEZP, with or without a following Z stage. The A (acid wash) stage effects removal of heavy metals, which are purged from the system when some of the wash filtrate is diverted. The extraction (E) stage may be an oxidative peroxide extraction stage, or a conventional oxidative extraction stage. The ozone bleaching stages are practised with the pulp at a consistency of about 5-18% solids content by weight

The method is typically practised utilising an impregnation vessel, and a conduit connected between the impregnation vessel and the digester; and step (a) is practised by adding kraft white liquor to the conduit and impregnation vessel, and so that the majority of the kraft white liquor added is added in the conduit and the impregnation vessel, about 5-20% by weight of the kraft white liquor utilised to effect kraft cooking is added in step (f), and about 10-20% of the kraft white liquor utilised is added in step (d).

According to another aspect of the present invention, there is provided a method of producing bleached kraft pulp, comprising the steps of sequentially: (a) Subjecting kraft pulp to hot alkali extraction, to remove lignin from the pulp without degradation thereof. (b) Subjecting the pulp to oxygen bleaching. (c) Removing at least some heavy metals from the pulp; and (d) ozone bleaching the pulp, while it has a consistency of about 5-18%. Step (c) is practised by acid washing the pulp to produce a wash filtrate, and removing part of the filtrate to prevent the build up of heavy metals. Step (d) is practised by the bleaching sequence ZEZP or (ZE)P(ZE)P, with or without a final Z stage.

It is the primary object of the present invention to provide for the production of kraft pulp having acceptable brightness (e.g. greater than 90 CPPA) and commercially acceptable strength, without utilising chlorine containing bleaching compounds. This and other objects of the invention will become clear from an inspection of the detailed description of the invention, and from the appended claims.

## BRIEF DESCRIPTION OF THE DRAWINGS

Figures 1A and 1B provide a schematic view showing apparatus for practising the exemplary method according to the invention in which an extended modified continuous cooking process is employed to produce pulp, followed by hot alkali extraction and non-chlorine bleaching sequences; and

Figure 2 is a schematic view of the wash aspects of the treatment sequence of Figures 1A and 1B showing the liquid flow interconnections between the various stages.

## DETAILED DESCRIPTION OF THE DRAWINGS

An exemplary apparatus for kraft pulping according to the invention is illustrated in Figure 1A. Entirely standard components include a chips bin 10 for receiving a feed of chips or like cellulosic comminuted fibrous material. From the chips bin 10, the material goes to a horizontal steaming vessel 12, and a vertical conduit 13, kraft white liquor from the source 14 being added to the material in the conduit 13 to slurry the material as it is fed to the high pressure feeder 15. From the high pressure feeder 15 the material entrained in kraft white liquor passes to an optional impregnation vessel 16, and then in line 17 to the top 18 of a continuous digester 19. At the top of the digester 19 there is a liquid/material separation device 20, which preferably comprises a plurality of bull screens with switching withdrawal from the screens, or the like. The digester 19 also includes a central portion 21 and a bottom 22.

At a portion of the digester 19 between the top 18 and the central portion 21 thereof one or more screens 23, and conduit 24, are provided as means for extracting black liquor from the digestet 19. The black liquor is typically passed in conduit 24 to a series of flash tanks, as is conventional. At the central portion 21 of the digester 19, withdrawal screens 27 are also provided, being connected by a withdrawal conduit to a pump 28 and a heater 29 for re-introduction of the withdrawn liquid at point 30 of a re-introduction conduit, the point 30 typically being slightly above the screens 27. At the bottom 22 of the digester, kraft pulp is withdrawn in conduit 33 (a scraper or like conventional components can also be utilised), and wash liquor from source 34 is added in introduction conduit 35.

Adjacent the bottom of the digester 19 a wash screen (one or more rows) 37 is provided, liquid being withdrawn therethrough in a withdrawal conduit under the influence of pump 38, and then passing through heater 39 into a re-introduction conduit to be introduced at point 40 just above the screen 37. From the point 40 up to the screens 23, liquid flows countercurrently to the material -- as designated by arrows 42 -- while above the screens 23 it flows cocurrently.

If desired, white liquor having higher sulfidity may be supplied to the vessel 16 than to the digester 19; or at other desired points in the system, the wood chips may first be treated with high sulfidity liquor, and then normal white liquor, such as shown in copending application Serial Number 07/788,151 filed November 5, 1991. That is, white liquor added prior to the beginning of the cooking reaction may have enhanced sulfidity relative to the average sulfidity of the mill's white liquor supply(14), and also preferably has an elevated level of sodium polysulfide.

What has been described so far, and including a main conduit 44 for adding kraft white liquor in conduit 45 to the first recirculation loop at digester central portion 21, is conventional in the Kamyr MCC™ system. A conduit 46 is provided for interconnecting the main conduit 44 to the withdrawal conduit in the second wash recirculation loop provided by elements 37 through 40.

In the practice of the present invention, sufficient kraft white liquor, and additional heat, are added in conduit 46 so as to achieve significantly enhanced viscosity and strength properties of the pulp produced compared to the practice of the same method without the introduction of kraft white liquor in conduit 46. For example, the amount of kraft white liquor added in conduit 46 is at least about 5% the total amount of kraft liquor utilised to effect kraft pulping, and typically is about 10-20% (e.g. about 15%). Kraft white liquor preferably is also added -- as is known per se -- in conduit 45 in addition to conduit 46, the amount added in conduit 45 being at least about 10%, and preferably about 10-20% by weight.

The apparatus of Figure 1A also includes a recirculation loop (not shown) at a central portion-- indicated generally by reference numeral 49 -- of the impregnation vessel 16, including a screen, withdrawal conduit, pump, and reintroduction conduit/point. Kraft white liquor from source 14 also is preferably added as indicated by lines or points 52, 53, 54 to the recirculation loop in the impregnation vessel 16, and to the recirculation conduits from the digester to the impregnation vessel 16, and from the impregnation vessel 16 to the high pressure feeder 15. Normally the majority of the white liquor used in the conventional continuous kraft pulping process is added at the points or conduits 52-54. The extended delignification pulp in line 33 is then subjected to an optional further wash stage 58, and other treatments.

After optional wash stage 58, the pulp passes to a hot alkali extraction vessel/stage 60. Hot alkali extraction (HAE) is known per se from Finnish Patent document 865135/1986, and includes treatment of the pulp with a mild alkali solution at a temperature of about 150°C for a time sufficient to extract residual lignin from the pulp (typically about thirty minutes or less). The pulp may pass from HAE stage 60 to a pressure diffuser 61 or the like (e.g. a DD™ washer sold by Ahlstrom Recovery of Roswell, Georgia) for washing. In the diffuser 61, white liquor may be added to enhance delignification, as shown in U. S. Patent 5,021,127. The pulp may then pass to oxygen stages 62,63, which may be of the type shown per se in U. S. Patent 4,946,556. At this point, the Kappa number of the pulp has been reduced between about 10 and 5 units compared to CK softwood pulp, and between about 5 to 2 units compared to CK hardwood pulp.

After the optional second (or subsequent) oxygen stage 63, the pulp passes to a pressure relief vessel 64, and then to diffusion washer 65 or the like on top of vessel 66. Acid and enzymes may be added to the pulp in the tank 66 to facilitate removal of heavy metals in a subsequent acid wash stage. Separation of undesirable particles and screening take place at 67, 68, typically at a consistency of about 3-4% and under pressure. Alternatively, the screening system (like structures 67,68) may be located in front of the oxygen vessels 62, 63 in the process sequence.

In the acid wash stage 69 (Figure 1B), some of the wash filtrate is removed and passes to cooking liquor preparation 70. This removed filtrate contains heavy metals, and is accomplished to prevent build up of heavy metals in the pulp. The pulp then is ready to be bleached with non-chlorine (e.g. chlorine and chlorine dioxide free) bleaching chemicals, yet it will produce pulp comparable to CK pulp produced by a DEDED sequence.

Although chlorine free treatment is vastly preferred, according to the invention beter quality pulp can also be produced by using the EMCC™ treatment followed by hot alkali extraction.

The first bleaching stage is preferably an ozone (Z) stage, 71, which is practised with the pulp at medium consistency (i.e. about 5-18%). This Z stage is preferably practiced so that the ozone in an oxygen carrier gas is introduced under super atmospheric pressure, typically with about 2-14% of the introduced gas comprising ozone.

After ozone stage 71, the pulp passses to tanks 72 or the like, is washed as indicated at 73, and then subjected to an extraction stage (E) in vessels 74 and/or 75. Alternatively, there can be no washing between 71, 74 i. e. a (ZE) stage instead of ZE stages. A (ZE) stage is known per se. The vessels 74,75 typically provide and oxidative peroxide extraction stage (sometimes designated Eop). After the extraction stage wash sequence at 76, bleaching preferably continues in Z stage 77 (comparable to stage 71), which is corrected to tank 78 which maintains the pulp in contact with added peroxide, and after the ozone stage 77 and washing in washer 79, the pulp passes to peroxide (P) stage 80.

After P stage 80 washing in washer 81, the pulp may pass to another, optional, Z stage 82 (the same as stages 71, 77, with medium consistency treatment), and from storage tanks 83 pulp may be withdrawn in the bleached pulp discharge line 84. The pulp in line 84 has properties comparable to conventional (CK) pulp subjected to a DEDED sequence. The bleaching chemical consumption is also comparable to a DEDED sequence. The following Table I provides an analysis of expected chemical consumption from the OOAZEZPZ sequence described above, while Table II indicates the expected Kappa number and yield loss associated with each stage of the sequence.

TABLE I

| Ozone bleaching - chemical comsumption | | | | | | | |
|---|---|---|---|---|---|---|---|
| Stage | 0 | A | Z | $E^{o}_{p}$ | $Z_{p_{o}}$ | P | Z |
| Oxygen kg/adt | 15 | | | 5 | 2 | | |
| Ozone kg/adt | | | 4 | | 2 | | 2 |
| Peroxide kg/adt | | | | 15 | 5 | 5 | |
| Ox. White liquor kg/adt | 12 | | | | | | |
| Alkali kg/adt | | | | 18 | 6 | 6 | |
| $H_2SO_4$ kg/adt | | 7 | | | 3 | | 1 |
| $MgSO_4$ kg/adt | 3 | | | 1 | 1 | 1 | |
| $Na_2EDTA$ kg/adt | | 1.5 | | 0.5 | 0.5 | 0.5 | |

**TABLE II**

| | Kappa number | Yield loss |
|---|---|---|
| EMCC™ | 20.0 | 0.7% |
| HAE | 15.0 | 1.3% |
| O.O | 8.0 | 0.1% |
| A | 7.0 | 0.1% |
| Z | 4.0 | 0.6% |
| $E^{o}_{p}$ | 1.5 | 1.3% |
| $Z_{p_{o}}$ | <1.0 | 0.25% |
| P | <1.0 | 0.25% |
| Z | <1.0 | <0.1% |

**Process conditions**

The oxygen (with small amounts of ozone) gas from the various stages 71, 77, 82 is captured in an oxygen recovery system 84'. After scrubbing to remove fibre, and after ozone destruction, some of the recycled oxygen may be passed to oxygen bleaching (e.g. stages 62, 63) via line 85', while the rest, in line 86', passes to the atmosphere or other uses within the pulp mill, or is recycled to the ozone production system.

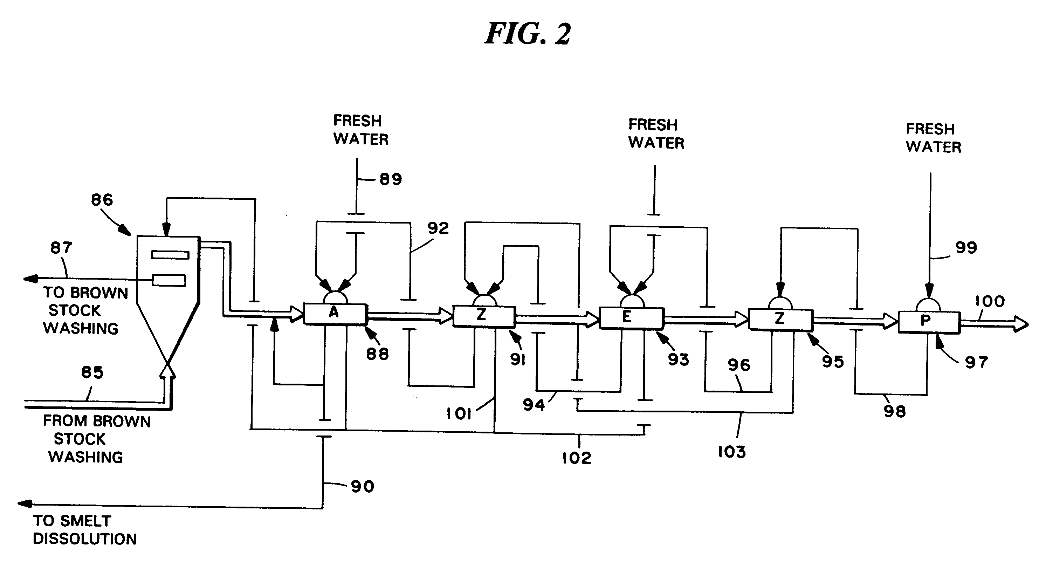

Figure 2 illustrates details of the washing sequences associated with and/or between the various stages described with respect to Figures 1A and 1B. The pulp in line 85 is from oxygen delignification, and is further washed in diffusion washer 86, with liquid return via line 87 to the brown stock washer. The washed pulp from diffusion washer 86 passes to acid washer 88 (comparable to 69 in Figure 1B), and is supplied with fresh water at 89. The filtrate in line 90, which comprises a variable, but significant, amount of the total filtrate from washer 88, is sent to cooking liquor preparation (e.g. 70 in Figure 1B), to prevent build up of heavy metals.

From washer 88, the pulp ultimately flows to washer 91 (comparable to 73 in Figure 1B) after the first ozone stage, with wash liquid from that washer being fed by line 92 to the washer 88 to provide part -- with the fresh water added at 89 -- of the wash liquid thereto. The pulp then ultimately flows to the washer 93 after the extraction stage, with recycle via line 94 back to the washer 91, and as the wash liquid for diffusion washer 86. Fresh water also provides part of the wash water to washer 93 (comparable to 76 in Figure 1B).

From washer 93 the pulp ultimately passes to washer 95 (comparable to 79 in Figure 1B) after the next Z stage, with recycle via line 96, and then to washer 97 (comparable to 81 in Figure 1B) after the P stage, with recycle via line 98. Fresh water is added at 99 to the washer 97 as the wash liquid. The pulp discharged in line 100 may pass to a final Z stage, and then becomes the final pulp (in line 84 from Figure 1B).

The washers 69, 73, 76, 79, 81, 88, 91, 93, 95, and 97 may be drums, diffusers, belts, presses, or the like, as long as they provide adequate washing efficiency. The washer 61 must be a pressurised washer.

A portion of the washing filtrate from lines 92, 94, 96, 98, 101, 102, and/or 103 may be purged from the system to the acid or caustic sewer in order to maintain acceptable dissolved solids and metals concentration levels in the system.

It will thus be seen that according to the present invention a high brightness, high strength bleached kraft pulp can be produced without chlorine based bleaching compounds. While the invention has been herein shown and described in what is presently conceived to be the most practical and preferred embodiment it will be apparent to those of ordinary skill in the art that many modifications may be made thereof within the scope of the invention, which scope is to be accorded the broadest interpretation of the appended claims so as to encompass all equivalent processes and methods.

## Claims

1.  A method of continuously kraft pulping and then bleaching comminuted cellulosic fibrous material using an upright digester (19) having top (18), bottom (22), and central (21) portions, comprising the steps of: (a) passing comminuted cellulosic fibrous material entrained in kraft white liquor into the top of the digester; (b) extracting black liquor from at least one screen (23) between the top and bottom of the digester; (c) at a first portion of the digester withdrawing and recirculating liquid in a first recirculation loop (27-30); (d) adding kraft white liquor to the first recirculation loop; (e) adjacent the bottom of the digester withdrawing and recirculating liquid in a second wash, recirculation loop (37-40); (f) adding kraft white liquor to the second recirculation loop, the liquor recirculated into the digester in part passing upwardly therein countercurrent to the material flow, the amount of white liquor added in the second recirculation loop being sufficient to increase the viscosity and strength properties of the pulp produced compared to the practice of the same method with the same material, Kappa Number, and other parameters only without step (f); and (g) withdrawing kraft pulp from the bottom digester (in 33), steps (a)-(f) being practised to produce pulp having a Kappa Number comparable to about 20 or below for softwood; characterised by the steps of:
    (h) subjecting the pulp withdrawn from the bottom of the digester to a hot alkali extraction (60) to extract lignin therefrom without degradation of the pulp fibres; and then
    (i) effecting bleaching of the pulp with non-chlorine containing bleaching chemicals (e.g. at 62, 63, 71, 74, 75, 77, 78, 80, 82) to obtain a bleached pulp having properties comparable to CK pulp bleached with a DEDED sequence.

2.  A method as recited in Claim 1 further characterised in that the bleaching chemicals utilised in the practice of step (i) are, first, oxygen, and peroxide and ozone.

3.  A method as recited in Claim 1 or 2 further characterised in that step (i) is practised by the bleaching sequence selected from the group consisting essentially of OOAZEZPZ, OAZEZPZ, OOAZEZP, and OAZEZP.

4.  A method as recited in Claim 3 further characterised in that the E stage is selected from the group consisting essentially- of an oxidative peroxide extraction stage, and an oxidative extraction stage.

5.  A method as recited in Claim 2, 3 or 4 further characterised in that the ozone bleaching stages are practised with the pulp at a consistency of about 5-18% solids content by weight; and further characterised by the steps, prior to treatment of the pulp with ozone, of: adding acid to the pulp (at 65, 66) to facilitate heavy metals removal; effecting acid washing (at 69) to produce a filtrate; and removing a part of the filtrate (at 70) to prevent the build up of heavy metals.

6. A method as recited in any preceding Claim further utilising an inpregnation vessel (16), and a conduit (17) connected between the impregnation vessel and the digester; and further characterised in that step (a) is practised by adding kraft white liquor to the conduit and impregnation vessel, and so that the majority of the kraft white liquor added is added in the conduit and the impregnation vessel, about 5-20% of the kraft white liquor utilised to effect kraft cooking is added in step (f), and about 10-20% of the kraft white liquor utilised is added in step (d).

7. A method as recited in Claim 1 further characterised in that step (i) includes practising the first part of the bleaching sequence by the steps OOA(ZE) or OA(ZE) or OOAZ or OAZ.

8. A method of producing bleached kraft pulp, comprising the steps of sequentially: (a) subjecting kraft pulp to hot alkali extraction (at 60), to remove lignin from the pulp without degradation thereof; (b) subjecting the pulp to oxygen bleaching (at 62, 63); and characterised by the steps of:
(c) removing at least some heavy metals from the pulp (at 69, 70); and (d) ozone bleaching the pulp (at 71) while it has a consistency of about 5-18% solids content by weight.

9. A method as recited in Claim 8 further characterised in that step (c) is practised by acid washing (at 69) the pulp to produce a wash filtrate, and removing part of the filtrate (at 70) to prevent the build up of heavy metals.

10. A method as recited in Claim 8 or 9 further characterised in that step (d) is practised by the bleaching sequence ZEZP or (ZE)P(ZE)P.

11. A method of continuously kraft pulping and then bleaching comminuted cellulosic fibrous material using an upright digester (19) having top (18), bottom (22), and central (21) portions, comprising the steps of: (a) passing comminuted cellulosic fibrous material entrained in kraft white liquor into the top of the digester; (b) extracting black liquor from at least one screen (23) between the top and bottom of the digester; (c) at a first portion of the digester withdrawing and recirculating liquid in a first recirculation loop (27-30); (d) adding kraft white liquor to the first recirculation loop; (e) adjacent the bottom of the digester withdrawing and recirculating liquid in a second, wash, recirculation loop (37-40); (f) adding kraft white liquor to the second recirculation loop the liquor recirculated into the digester in part passing upwardly therein countercurrent to the material flow, the amount of white liquor added in the second recirculation loop being sufficient to increase the viscosity and strength properties of the pulp produced compared to the practice of the same method with the same material, Kappa Number, and other parameters only without step (f); and (g) with drawing kraft pulp from the bottom of the digester (in 33), steps (a)-(f) being practised to produce pulp having a Kappa Number comparable to about 20 or below for softwood; and characterised by the steps of:
(h) subjecting the pulp withdrawn from the bottom of the digester to a hot alkali extraction (at 60) to extract lignin therefrom without degradation of the pulp fibres; and then
(i) effecting bleaching of the pulp (at 62, 63, 71, 74, 75, 77, 78, 80, 82), to produce a pulp having enhanced quality.

12. A method as recited in any one of Claims 1 to 7 further characterised in that the white liquor added prior to the beginning of the cooking reaction is enhanced relative to the average sulfidity of the mill's white liquor supply; and the white liquor added prior to the beginning of the cooking reaction has an elevated level of sodium polysulfide.

FIG. 1A

EP 0 557 112 A1

FIG. 1B

FIG. 2

## EUROPEAN SEARCH REPORT

**European Patent Office**

Application Number

EP    93 30 1222

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y,P | EP-A-0 476 230 (KAMYR, INC.)<br>* the whole document * | 1-12 | D21C9/10<br>D21C9/147<br>D21C9/153<br>D21C9/16 |
| Y | & DATABASE WPIL<br>Section Ch, Week 9206,<br>Derwent Publications Ltd., London, GB;<br>Class F09, AN 92-049439<br>& ZA-A-9 102 117 (KAMYR INC) 27 November 1991<br>* abstract *<br>--- | 1-12 | |
| Y | WO-A-9 118 145 (UNION CAMP CORPORATION)<br>* page 18, line 15 - page 39, line 26 *<br>----- | 1-12 | |
| | | | **TECHNICAL FIELDS SEARCHED (Int. Cl.5 )**<br><br>D21C |

The present search report has been drawn up for all claims

| Place of search | Date of completion of the search | Examiner |
|---|---|---|
| THE HAGUE | 19 MAY 1993 | SONGY Odile |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)